# EUROPEAN PATENT APPLICATION

(11) **EP 2 610 221 A1**
(43) Date of publication of application: **03.07.2013**
(21) Application number: 12150013.6
(22) Date of filing: 02.01.2012
(51) Int. Cl.: C02F 1/32, C02F 1/72, C02F 1/76

(54) **Method and arrangement for a water treatment**

(71) Applicant: Siemens Aktiengesellschaft, 80333 München (DE)
(72) Inventor: Sichel, Cosima, Dr., 89077 Ulm (DE)

(57) **Abstract**

The invention relates to a water treatment by oxidative processes (1).

The invention combines a first oxidant (15) added (12) to a water to be treated (7) with a second oxidant (16) added (13) to said water to be treated (7) with said first oxidant (15) being a permanganate species (15), said second oxidant (16) being different from said first oxidant (15) and said first and second oxidant (15, 16) treating (1) said water (7) by said oxidative processes.

## Description

### TECHNICAL FIELD OF THE INVENTION AND PRIOR ART

The invention relates to a water treatment by oxidative processes.

Water treatment by oxidative processes using oxidants, such as ozone, chlorine or chlorine dioxide, - added/applied to the water to be treated for said oxidative processes - are generally known. By said oxidative processes contaminants like residuals of pharmaceuticals or personal care products in water can be degraded and/or removed.

Within the last years many research works showed a suitability of Advanced Oxidation Processes (AOPs) for many applications, especially for water treatment ("Photocatalysis with solar energy at a pilot-plant scale: an overview", Malato et al., Applied Catalysis B: Environmental 37 (2002) 1-15; "Figures of Merit for the technical development and application of Advanced Oxidation Processes", Bolton et al., J. of Advanced Oxidation Technologies, 1,1 (1996)13-17).

Advanced Oxidation Processes (AOPs) for water treatment use a potential of high reactive radial species, mainly hydroxyl radicals (OH*), for oxidation of toxic or non or less biodegradable hazardous water contaminants.

Due to the high oxidation potential and low selectivity of the hydroxyl radicals, therefore reacting with almost every organic compound, the AOP can therefore be used to eliminate the contaminants, i.e. residuals of pesticides, pharmaceuticals, personal care products or x-ray contrast media, from (contaminated) water.

A versatility of AOPs is also enhanced by the fact that they offer different possible ways for hydroxyl radicals production, thus allowing a better compliance with specific treatment requirements.

A suitable, traditional application of AOP to wastewater treatments must consider that they make use of expensive reactants/oxidants such as H₂O₂, and/or O₃ for generating hydroxyl radicals.

"Photocatalysis with solar energy at a pilot-plant scale: an overview", Malato et al., Applied Catalysis B: Environmental 37 (2002) 1-15 review a use of sunlight to produce hydroxyl radicals.

At an ultraviolet driven AOP (UV AOP) UV radiation will be used to generate the hydroxyl radicals by a photolysis. Traditional UV driven AOPs for water treatment can be resumed as UV/H₂O₂ or UV/Ozone (UV/O₃ or their combinations, since H₂O₂ or O₃ are being photolysed by UV radiation producing hydroxyl radicals.

An UV driven chlorine species process as an AOP (UV/chlorine species AOP) is known from "Chlorine photolysis and subsequent OH radical production during UV treatment of chlorinated water!, Michael J. Watts, et al., Water Research 41, 2871 - 2878, 2007, and "Feasibility studies: UV/chlorine advanced oxidation treatment for the removal of emerging contaminants", C. Sichel, C. Garcia, K. Andre, Water Research XXX (2011) 1 -10 producing hydroxyl radicals by irradiating chlorinated solutions with UV.

Growing attention is paid to an increasing number of reports of less or non-biodegradable trace contaminants, like the residuals of pharmaceuticals or the personal care products, in surface, ground and even drinking water.

Three pharmaceuticals in focus, sulfamethoxazole, diclofenac and carbamzepine, could become most important as these three pharmaceuticals have been proposed for guideline water parameters in Germany.

These three pharmaceuticals are found abundantly and are considered harmful for an environment and a protection of drinking water sources. Their origin is an effluent of waste water treatment plants.

Because of their low biological degradation potential, sulfamethoxazole, diclofenac and carbamzepine are found in concentrations up to 1 µg/L. Proposed limits in surface waters were 0,1 µg/L for sulfamethoxazole and diclofenac and 0,5 µg/L for carbamazepine.

Known degradation/removal processes for pharmaceuticals, especially for sulfamethoxazole, diclofenac and carbamzepine are adsorption on activated carbon or removal/degradation by said oxidative processes using oxidants.

All these processes include relatively high costs as well as they can lack in removing/degrading several different contaminants, such as the three pharmaceuticals sulfamethoxazole, diclofenac and carbamzepine, at the same time, i.e. all together.

Therefore more efficient, more ecological and more economical processes, especially for removing sulfamethoxazole, diclofenac and carbamzepine from contaminated water and/or wastewater, are desired.

Equipments for dosing as well as for a controlled dosing of chlorine species to water to be treated are known as well as equipments for irradiating water with UV, for example "Wallace & Tiernan®, Wasseraufbereitungs- und Desinfektionssysteme, Oktober 2010.

Sensors for measuring a chlorine species concentration, an ozone concentration as well as a potassium permanganate concentration are known, for example a membrane sensor FC1 or a membrane sensor DC7 of Wallace & Tiernan (Wallace & Tiernan, Siemens, Water Technologies, Multi-Funktions-Analysesysteme, MFA-FC1, -CD7) or a DEPOLOX-5-Messzelle ("Wallace & Tiernan® Mess- und Regeltechnik MFC-DEPOLOX® 5 Multi-Funktions-Controller").

### SUMMARY OF THE INVENTION

It is a first objective of the invention to provide a method and an arrangement by which the above-mentioned shortcomings in water treatment can be mitigated.

It is a second objective of the present invention to provide a method and an arrangement for an efficient, ecological and economical water treatment, especially for contaminated water and/or wastewater, further more especially said water and/or wastewater being contaminated with sulfamethoxazole, diclofenac and carbamzepine.

These objectives are according to the invention achieved by providing a method for a water treatment by oxidative processes. This method comprises adding a first oxidant and a second oxidant to water to be treated, with said first oxidant being a permanganate species and said second oxidant being different from said first oxidant. Said first oxidant and second oxidant are treating said water by said oxidative processes.

These objects are according to the invention also achieved by providing an arrangement for a water treatment by oxidative processes.

Said arrangement comprises a first dosing means arranged for dosing a first oxidant to water to be treated with said first oxidant being a permanganate species. Said arrangement further comprises a second dosing means arranged for dosing a second oxidant to said water with said second oxidant being different from said permanganate species. Said first and second oxidant dosed to the water are qualified for treating said water by said oxidative processes.

In other words - invention relates to a water treatment combining a first oxidant added/dosed to said water to be treated with a second oxidant added/dosed to said water to be treated - with said first oxidant being a permanganate species and said second oxidant being different from said first oxidant. Said first oxidant, i.e. said permanganate species, and second oxidant treating said water by said oxidative processes.

The invention based on a surprising knowledge of a synergy for the combined treatment of a permanganate species, especially potassium permanganate, and a - further second - oxidant, especially a chlorine species, as chlorine, chlorine dioxide or chloramine.

This surprising synergy effect was unforeseen as long as combined water treatment with two oxidants, like combinations of a chlorine species with persulfate salts or hydrogen peroxide, usually reduce their oxidative strength and lower a removal yield of chemical substances - due to quenching effects.

As for example, hydrogen peroxide is known - and explicitly used - for said quenching effects reducing chlorine for dechlorination.

The invention will be qualified for reducing pharmaceuticals/pharmaceutical residues, especially sulfamethoxazole, diclofenac and carbamzepine, but as well as other hazardous water contaminants by said oxidative processes performed by said inventive oxidants, especially as each of the oxidants according the invention, i.e. the permanganate species and the second oxidant, added to the water could affect different contaminants.

Hence, using said inventive combination, i.e. said synergy effect, of said two different oxidants, one of them being said permanganate species, the invention is highly qualified for removing/degrading several different contaminants at the same time, especially sulfamethoxazole, diclofenac and carbamzepine.

As well as an improvement of disinfection could be achieved by the invention.

Another side effect of the invention is the removal of estrogenicity out of water to be treated. Especially potassium permanganate combined with a chlorine species can remove a hormone 17-alpha-Ethylestradiol almost completely out of water to be treated.

While being highly effective the invention will reduce strongly capital and operational cost of state of the art processes in water treatment.

Therefore, the invention provides a new, effective process as a very efficient water treatment procedure reaching a targeted water quality at a very economic, ecological and practical way.

According to a preferred embodiment, the permanganate species can be added/dosed in liquid form. Said permanganate species, especially potassium permanganate, can also be added as a salt, especially as potassium salt.

According to a preferred embodiment, said permanganate species is potassium permanganate and/or said second oxidant is chlorine dioxide. Potassium permanganate and chlorine dioxide are accepted with German drinking water norms while these oxidants therefore can be applied for different water sources, belong them drinking water.

According to a preferred embodiment, said permanganate species is added at a concentration of about 1 mg/L.

According to a preferred embodiment, said second oxidant is a chlorine species, especially chlorine or chlorine dioxide or chloramine, especially mono-/di-/tri-chloramine, or a hypo chlorite species, especially natrium/potassium/calcium hypo chlorite.

Said chlorine species can be added at a concentration of about 0,4 mg/L.

While adding said chlorine (Cl₂) or chlorine dioxide (ClO₂) - for example by using a dosing means - chlorine (Cl₂) and chlorine dioxide (ClO₂) will be dissolved in said water as free chlorine species.

Free chlorine species are known as a concentration of residual chlorine in water present as dissolved gas (Cl₂), hypochlorous acid (HOCl), and/or hypochlorite ion (OCl⁻) .as well as a concentration of residual chlorine dioxide in water.

The forms of free chlorine species exist together in equilibrium - depending by a pH value and a temperature of the water.

Said second oxidant can also be ozone or a persulfate species, especially sodium/potassium/ammonium persulfate, in its peroxomonosulfate or peroxodisulfate form.

According to a preferred embodiment said permanganate species is added - by said respective dosing means - to said water before/upstream or after/downstream of said adding/dosing of said second oxidant to said water - by said respective dosing means - while said water is flowing along.

According to a preferred embodiment said water can be irradiated with an UV irradiation for applying an UV AOP to said water.

The irradiation of the water yields radical species, especially OH* radicals, - using a potential of the high reactive radicals for - an enhanced - oxidation of contaminants in the water to be treated.

Further to that said UV AOP can also degrade disinfection byproducts (DBPs) that are produced - especially during chlorine disinfection - in oxidative treated water. Said UV AOP can inactivate water-borne pathogenic microorganisms and destroy hazardous organic compounds in said water.

An UV source can be arranged for said irradiating, i.e. for applying said UV AOP. According to a preferred embodiment said UV source, for example an UV lamp, is arranged in a reaction chamber while said water to be irradiated is flowing through said reaction chamber.

Said UV irradiation can be applied with an irradiation dose of about 400 J/m² - 4000 J/m² and/or said UV irradiation having a wavelength of about 100 nm - 400 nm, especially having a wavelength of about 200 nm - 400 nm, further more especially of about 250 nm - 260 nm.

In a preferred embodiment said UV source will be a poly-chromatic irradiator/medium pressure UV source. Medium pressure UV sources/lamps provide an expanded wave length spectrum and could be constructed more compact.

Said UV source could also be a mono-chromatic irradiator/low pressure UV source, for example a low pressure amalgam UV lamp or a low pressure mercury UV lamp. Low pressure UV lamps are highly efficient while mainly providing a small spectrum by a wave length of about 257,3 nm, less energy input combined with less costs.

As well solar irradiance can be used as an UV source.

Further more an UV sensor (or more) - for a low pressure UV source or a medium pressure UV source - and/or a UV filter (or more) could be used in combination with said UV irradiation provided by said UV source, e.g. low pressure UV source or medium pressure UV source, for controlling an irradiance of said UV irradiation, especially while measuring said UV irradiation filtered by said UV filter.

According to a preferred embodiment a further filter could be used - in combination with said UV source - filtering said UV irradiation to irradiate the water, e.g. to cut-off the UV irradiation at predetermined wave length. E.g., a quartz sleeve could be used to achieve cut-off of the UV irradiation at 240 nm to irradiate said water to be treated, e.g. potable water, with UV wave length longer than 240 nm.

According to a preferred embodiment said permanganate species will be added to said water first, followed by said adding of said second oxidant, further followed by said UV irradiation of said water. According to another preferred embodiment said second oxidant will be added to said water first, followed by said adding of said permanganate species, further followed by said UV irradiation of said water. As well as said second oxidant can be added to said water first, followed by said UV irradiation of said water, further followed by said adding of said permanganate species.

According to a further preferred embodiment, a concentration of said permanganate species and/or of said second oxidant, especially of said chlorine species, i.e. of said free chlorine species, are/is measured - especially by using a measuring means/measuring means, particularly a respective sensor/- s.

The first and/or second dosing means could be installed in a way that allows homogenization of the added/dosed oxidant, i.e. said permanganate species and said second oxidant, before said concentration measurement(-s).

By measuring said chlorine species concentration said measuring means can be a sensor measuring a free chlorine or chlorine dioxide equivalent. Such a sensor, for example a membrane sensor FC1 or a membrane sensor DC7 of Wallace & Tiernan (Wallace & Tiernan, Siemens, Water Technologies, Multi-Funktions-Analysesysteme, MFA-FC1, -CD7), is well known, long term stable while measuring and requires less maintenance costs.

Sensors measuring said permanganate species concentration are also known, for example from "Wallace & Tiernan® Mess- und Regeltechnik MFC-DEPOLOX® 5 Multi-Funktions-Controller".

As well open cell amperiometric systems can be used for said concentration measurements.

A controller system could be used for controlling said water treatment, especially controlling said adding of said first and/or said second oxidant, i.e. said permanganate species and/or said second oxidant, and/or especially controlling said respective dosing means adding said first and/or said second oxidant. As well as said controller can control said UV irradiating of said water, i.e. said UV source irradiating said water. Said controller can also control a flow rate of said water.

Sensor signals and/or sensor data according to said measured concentration as well as signals of said UV source could also be processed by said controller to control said water treatment.

Especially said adding/dosing of said first and/or said second oxidant, i.e. said permanganate species and/or said second oxidant, as well as said UV AOP, i.e. said UV source/UV irradiation, could be controlled by using said measured concentrations, especially by using said measured concentration/-s of said permanganate species and/or of said second oxidant, further more measured before and after the UV AOP.

According to a preferred embodiment said water to be treated flows at a flow rate of 50 m³/h - 1000 m³/h, especially at a flow rate of about 200 m³/h. The flow rate can be controlled/monitored by use of a flow control and/or of said controller. Often the flow rate is a given requirement of the customers and therefore the monitoring of variations in flow rate can be used to adjust said water treatment accordingly. According to a preferred embodiment said water to be treated, for example potable water, (municipal)waste water, industrial-/process water or ultrapure water, could be contaminated water, especially contaminated with hazardous contaminants with low or non bio degradability, further more especially contaminated with residuals of pharmaceuticals and/or personal care products. Said pharmaceuticals can be sulfamethoxazole, diclofenac and carbamzepine.

Further advantages as well as advantageous features of the invention appear from the following description.

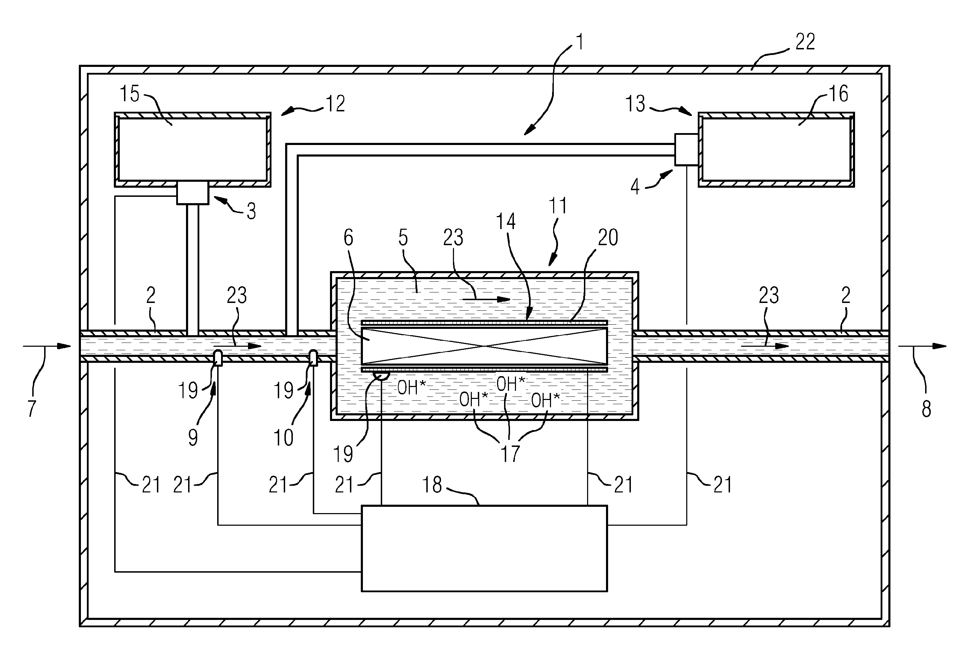

### BRIEF DESCRIPTION OF THE DRAWING

With reference to the appended drawing, below follows a specific description of an embodiment of the invention cited as example.

The sole figure is a schematic illustration of a water treatment system according to an embodiment of the invention.

### DETAILED DESCRIPTION OF AN EMBODIMENT OF THE INVENTION

The present invention is directed to an arrangement and a method for a water treatment by oxidative processes 1 - using two different oxidants 15, 16, one of them being a permanganate species, i.e. potassium permanganate 15, the other one being different, combined with an UV AOP 11 (cited also just as water treatment 1), as schematically illustrated in the figure.

The water treatment 1 as illustrated in the figure will be used for decontaminating water 7, for example municipal waste water or drinking water.

The water to be treated/decontaminated (contaminated water) 7 contains hazardous contaminants, especially residuals of pesticides, pharmaceuticals, personal care products which can be eliminated by the water treatment 1.

As using the combination of potassium permanganate 15 - as a first oxidant 15 - with said chlorine species 16 - as said different second oxidant 16, in this case chlorine dioxide 16, - while further more combined with said UV/chlorine species (chlorine dioxide)/potassium permanganate AOP 11, just cited only as UV AOP 11, - said water treatment 1 allows a nearly complete removal of the pharmaceuticals, especially sulfamethoxazole, diclofenac and carbamzepine, out of the water 7 at concentrations of about 0,4 mg/L chlorine dioxide and about 1 mg/L potassium permanganate.

The contaminated water 7 will flow 23 through a water circulation using a piping system 2 discharging said contaminated water 7 from the source (waste water treatment plant or drinking water treatment plant - not shown), pumping said discharged water 7 through the arrangement 1 for the water treatment 1 being decontaminated by the process for the water treatment 1 and discharging the treated and decontaminated water 8 in the water body or fresh water piping system 2.

The arrangement for the water treatment 1 comprises three sections 12, 13, 14 for treating the contaminated water 7 - arranged within a housing 22. The three sections (12, 13, 14) are arranged in flow direction 23 of the water to be treated 7 so that the water 7 can pass - fed by a pump (not shown) - the three section 12, 13, 14 of the arrangement 1.

In the first section 12 the potassium permanganate 15 is added 12 to the contaminated water 7. A dosing apparatus 3 is functionally connected to the piping system 2 arranged for adding 12 the potassium permanganate 15 to the contaminated water 7 while the contaminated water 7 is passing the first section 12.

The potassium permanganate 15 is added 12 as potassium permanganate salt 12 to the water 7 to be dissolved in the water 7 as permanganate ions.

A sensor 19 is arranged within the first section 12 for measuring 15 the concentration of the potassium permanganate 15 dissolved in the water 8.

The sensor 19 as well as the dosing apparatus 3 is connected to an analyser and controller system 18, cited as a controller 18, via a circuit 21 controlling the adding 12 of the potassium permanganate 12.

The water to be treated 7 - leaving the first section 12 - enters the second section 13.

In the second section 13 the chlorine species 15, i.e. chlorine dioxide 15, is added 12 to the water 7.

A dosing apparatus 4 is also functionally connected to the piping system 2 arranged for adding 13 the chlorine dioxide 16 to the contaminated water 7 while the contaminated water 7 is passing 23 the second section 13.

The chlorine dioxide 16 added 12 to the water 7 will be dissolved in the water 7 as free chlorine.

A sensor 19 is arranged within the second section 13 for measuring 10 the concentration of the free chlorine in the water 7.

The sensor 19 as well as the dosing apparatus 4 is also connected to the controller 18, via a circuit 21 controlling the adding 12 of the chlorine dioxide 16.

The water - added (12, 13) with said potassium permanganate 15 and said chlorine dioxide 15 and leaving the second section 13 - enters the third section 14, i.e. a reaction chamber 5 with one or several low pressure, mono-chromatic amalgam UV lamps 6, to be irradiated 14 with UV irradiation 14. While the water to be treated 7 being irradiated 14 with UV an UV AOP 11, i.e. an UV/potassium permanganate/chlorine dioxide AOP 11, will be processed within the water to be treated 7.

The figure shows an UV sensor 19 and a UV filter 20 being arranged at the UV lamp 6 used for controlling 18 the irradiance of said UV irradiation 14 while measuring said UV irradiation 14 filtered by said UV filter 20.

The UV sensor 19 as well as the UV lamp 6 is also connected to the controller 18 via a circuit 21.

The irradiation of the water to be treated 7 - provided with an irradiation dose of about 3000 J/m² - yields radical species 17, especially OH* radicals 17, since it is possible to generate radical species 17 from irradiation of chlorine and permanganate with UV.

The number of the radicals 17 depends, belong other parameters, on the (initial) permanganate concentration of the potassium permanganate 15 added 12, on the (initial) chlorine concentration of the chlorine dioxide 16 added 13 and the irradiance of the UV source/lamps 6.

Potassium permanganate 15 and chlorine dioxide 16 will be - controlled - added at concentrations of about 0,4 mg/L chlorine dioxide and about 1 mg/L potassium permanganate.

The UV AOP 11 uses the potential of the high reactive radicals 17 for oxidation of the contaminants in the water to be treated 7 while eliminating the contaminants of the water 7.

The reaction chamber 5 can have varying shape and size.

The figure shows said reaction chamber 5 shaped as a cylinder being passed by the water to be treated 7.

Leaving the third section 14 the decontaminated water 10 will be discharged in the pool.

As an alternative for described embodiment the three sections, i.e. dosing potassium permanganate 12, dosing chlorine dioxide 13 and UV irradiating 14, can also be arranged in a different order, for example dosing chlorine dioxide first 13, dosing potassium permanganate second 12 and UV irradiating third 14 as well as dosing chlorine dioxide first 13, UV irradiating second 14 and dosing potassium permanganate third 12.

### Reference list

- 1: water treatment by oxidative processes using a permanganate species and a second oxidant - in combination with an UV AOP (method/arrangement)
- 2: piping system, water circulation
- 3: dosing apparatus for adding a first oxidant/permanganate species/potassium permanganate
- 4: dosing apparatus for adding a second oxidant/chlorine species/chlorine dioxide
- 5: reaction chamber
- 6: UV lamp, UV source
- 7: contaminated water
- 8: water after dosing and UV AOP, decontaminated water
- 9: measuring/analysing a concentration of (15)
- 10: measuring/analysing a concentration of (16)

- 11: UV/permanganate species/second oxidant AOP, UV/potassium permanganate/chlorine dioxide AOP,
- 12: adding/dosing permanganate species/potassium permanganate (section)
- 13: adding/dosing second oxidant/chlorine species/chlorine dioxide (section)
- 14: irradiating with UV/applying an UV irradiation, UV irradiation (section)
- 15: first oxidant, permanganate species, potassium permanganate
- 16: second oxidant, chlorine species, chlorine dioxide
- 17: OH* radicals
- 18: controller, controlling (1)
- 19: (chlorine/UV/permanganate) sensor

- 20: filter
- 21: circuit
- 22: housing
- 23: flow direction

## Claims

1. Method (1) for a water treatment by oxidative processes comprising
- adding (12, 13) a first oxidant (15) and a second oxidant (16) to water to be treated (7), with said first oxidant (15) being a permanganate species (15), said second oxidant (16) being different from said first oxidant (15) and said first oxidant (15) and second oxidant (16) treating said water (7) by said oxidative processes.

2. Method (1) for a water treatment according to any preceding claim wherein said permanganate species (15) is potassium permanganate.

3. Method (1) for a water treatment according to any preceding claim wherein said permanganate species (15), especially said potassium permanganate, is added (12) as a salt, especially as potassium salt, and/or said permanganate species (15) is added (12) at a concentration of about 1 mg/L.

4. Method (1) for a water treatment according to any preceding claim wherein second oxidant (16) is a chlorine species (16), especially chlorine or chlorine dioxide or chloramine, especially mono-/di-/tri-chloramine, or a hypo chlorite species, especially natrium/potassium/calcium hypo chlorite, or is ozone or is a persulfate species, especially sodium/potassium/ammonium persulfate, in its peroxomonosulfate or peroxodisulfate form.

5. Method (1) for a water treatment according to the preceding claim wherein said chlorine species (16) is added (13) at a concentration of about 0,4 mg/L.

6. Method (1) for a water treatment according to any preceding claim wherein said permanganate species (15) is added (12) to said water (7) before/upstream or after/downstream of said second oxidant (16) added (13) to said water (7) while said water (7) is flowing along (23).

7. Method (1) for a water treatment according to any preceding claim further comprising irradiating (14) said water (7) with UV irradiation (14) for applying an UV AOP (11) to said water (7), especially wherein said UV irradiation (14) will be applied (14) with an irradiation dose of about 400 J/m² - 4000 J/m² and/or said UV irradiation having a wavelength of about 100 nm - 400 nm, especially having a wavelength of about 200 nm - 400 nm, further more especially of about 250 nm - 260 nm.

8. Method (1) for a water treatment according to the preceding claim wherein said permanganate species (15) is added (12) to said water (7) before/upstream or after/downstream of said irradiating (14) of said water (7) while said water is flowing along (23).

9. Method (1) for a water treatment according to any preceding claim further comprising measuring a concentration/concentrations (9, 10) of said permanganate species (15) added (12) to said water (7) and/or said second oxidant (16) added (13) to said water (7) and/or controlling (18) said water treatment (1), especially said adding (12) of said permanganate species (15) and/or said adding (13) of second oxidant (169 and/or said irradiating (14) of said water (7), by said measured concentration/-s.

10. Method (1) for a water treatment according to any preceding claim wherein said water to be treated (7) is a contaminated water, especially contaminated with hazardous contaminants with low or non bio degradability, further more especially contaminated with residuals of pharmaceuticals and/or personal care products.

11. Method (1) for a water treatment according to any preceding claim used for water treatment (1) of (municipal) potable water, waste water, industrial-/process water or ultrapure water.

12. Arrangement (1) for a water treatment by oxidative processes comprising
- a first dosing means (3) arranged for dosing (12) a first oxidant (15) to water to be treated (7) with said first oxidant (15) being a permanganate species (15),
- a second dosing means (4) arranged for dosing (13) a second oxidant (16) to said water (7) with said second oxidant (16) being different from said first oxidant (15) and said first oxidant (15) and said second oxidant (16) treating said water (7) by said oxidative processes.

13. Arrangement (1) for a water treatment according to any preceding claim further comprising an UV source (6) arranged for irradiating (14) said water (7) with UV irradiation (14) for applying an UV AOP (11) to said water (7), especially wherein said UV source (6) is a mono-chromatic irradiator or a poly-chromatic irradiator and/or said UV source is a low pressure UV source or a medium pressure UV source.

14. Arrangement (1) for a water treatment according to any preceding claim further comprising at least one measuring and/or analysing means (19) arranged for measuring (9, 10) and/or analysing (9, 10) a concentration/concentrations of said permanganate species (15) dosed (12) to said water (7) and/or said second oxidant (16) added (13) to said water (7), especially said at least measuring means (19) measuring (9, 10) said concentration/concentrations before/upstream and/or after/downstream irradiating (14) said water (7) with said UV irradiation (14).

15. Arrangement (1) for a water treatment according to any preceding claim further comprising a controller system (18) arranged for controlling (18) said dosing (12) of said permanganate species (15) and/or said dosing (13) of said second oxidant (16) and/or an UV irradiation (14) of said water (7).
